# EUROPÄISCHE PATENTSCHRIFT

(11) **EP 0 683 630 B1**
(45) Veröffentlichungstag und Bekanntmachung des Hinweises auf die Patenterteilung: **13.08.1997**
(21) Anmeldenummer: 94904970.4
(22) Anmeldetag: 25.01.1994
(51) Int. Cl.: A23L 1/2165

(54) **VERFAHREN ZUM VERARBEITEN VON KARTOFFELN FÜR DIE INDUSTRIELLE KARTOFFELTEIGHERSTELLUNG UND EINRICHTUNG ZUR TEILWEISEN DURCHFÜHRUNG DES VERFAHRENS**
METHOD FOR PROCESSING POTATOES FOR THE INDUSTRIAL PRODUCTION OF POTATO DOUGH AND APPARATUS FOR PERFORMING PART OF THE PROCESS
PROCEDE DE TRAITEMENT DES POMMES DE TERRE POUR LA FABRICATION INDUSTRIELLE DE PATE DE POMMES DE TERRE ET DISPOSITIV POUR L'EXECUTION PARTIELLE DU PROCEDE

(30) Priorität: 11.02.1993 DE 4304093
(43) Veröffentlichungstag der Anmeldung: 29.11.1995
(73) Patentinhaber: BURGI'S GMBH, 92318 Neumarkt/Opf. (DE)
(72) Erfinder: WEISS, Benno, D-92334 Berching (DE)
(74) Vertreter: Petra, Elke, Dipl.-Ing.
(86) Internationale Anmeldenummer: DE9400067
(87) Internationale Veröffentlichungsnummer: WO9417677

(56) Entgegenhaltungen:
- EP-A- 0 536 030
- WO-A-82/02652
- DE-A- 3 804 339
- GB-A- 2 167 180
- US-A- 3 664 397
- US-A- 4 276 314

## Beschreibung

Die Erfindung bezieht sich auf ein Verfahren zum Verarbeiten von Kartoffeln für die industrielle Herstellung von Kartoffelteig gemäß dem Oberbegriff des Patentanspruchs 1, wie es insbesondere zur Herstellung von Kartoffelknödeln usw. eingesetzt wird. Des weiteren bezieht sich die Erfindung auf eine Einrichtung zum Durchführen eines Verfahrens-Schrittes für die Herstellung von Kartoffelteig-Roh-/Halb- oder Fertigprodukten, gemäß Oberbegriff des Anspruchs 7.

Um beispielsweise im Handel erhältliche rohe Kartoffeln so weit vorzubereiten, daß ein Kartoffelteig zubereitet werden kann, aus dem z.B. Kartoffelklöße hergestellt werden können, werden derzeit die Kartoffeln gewaschen, geschält und anschließend maschinell sortiert. Die Sortierung wird optoelektronisch so durchgeführt, daß geschälte Kartoffeln, die Flecken aufweisen, aussortiert werden, während die fleckenlosen, guten Kartoffeln im Produktionsprozeß direkt weitergereicht werden.

Die aussortierten, fehlerhaften Kartoffeln werden ein zweites Mal geschält, um hierdurch bereits einen gewissen Prozentsatz an defektem Material abzutragen und somit Nacharbeit zu reduzieren. Danach werden die verbliebenen defekten Stellen von Hand nachgeputzt, d.h. ausgeschnitten. Dieses Nachputzen von Hand ist sehr arbeitsintensiv. Zudem wird beim Ausschneiden der defekten Stellen sehr rasch gearbeitet, wodurch mit einem schwungvollen Schnitt sehr viel mehr gutes Kartoffelmaterial mit abgeschnitten wird, als wenn eine Hausfrau sorgsam ein Auge oder einen schwarzen Flecken ausschneidet. Die Folge davon ist nicht nur ein hoher Materialverlust, sondern auch ein hoher Bedarf an unqualifiziertem Personal. Die vom Sortier-Automaten als gut befundenen sowie die nachgeputzten Kartoffeln werden dann gekocht, gekühlt und gerieben. Das Kühlen erfolgt üblicherweise zuerst mit Hilfe von Umluft und danach in einem Kühltunnel auf ca. 5° C. Es ist bekannt, daß heiße Kartoffeln sehr langsam auskühlen, wodurch viel Energie und Zeit benötigt werden, bis die für die Weiterverarbeitung optimalen 5° C erreicht sind. Anschließend werden die gekühlten ganzen Kartoffeln gerieben, wodurch ein zu Teig gut zu verarbeitendes, faserhaltiges Material erzielt wird, das insbesondere bei der Kartoffelknödelherstellung einen guten Zusammenhalt des Teiges sicherstellt.

Es ist versucht worden, das Nachputzen der Kartoffeln zu umgehen, indem Kartoffeln von besonders hoher Qualität verwendet wurden. Diese sind jedoch relativ teuer. Zudem ist auch bei der Verwendung relativ guter Kartoffelqualitäten nicht zu vermeiden, daß trotz guter Lagerung durch Altern der Kartoffeln im Laufe des Jahres der Defektanteil entsprechend steigt.

Zwar ist in der DE-OS 33 28 244 ein vollautomatisch durchführbares Verfahren zur Herstellung von Kartoffel-Frischkloßteig sowie eine Anlage zur Durchführung dieses Verfahrens beschrieben, bei denen rohe Kartoffeln vorsortiert, gewaschen, geschält, dann in einer sogenannten "Egalisierungsstufe" zu Stücken gleicher Dicke (Grob-Zerkleinerung) von vorzugsweise 3 - 5 cm verarbeitet werden, wonach die Kartoffelstücke halbgar gekocht, gekühlt, fein zerkleinert usw. werden. Durch das grobe Vorsortieren ungewaschener, ungeschälter Kartoffeln können insbesondere kleinere defekte Stellen der Kartoffeln nicht festgestellt werden. Zudem findet ein Nachsortieren der grob zerkleinerten Kartoffelstücke nicht mehr statt, so daß ein relativ hoher Anteil defekter Kartoffelteile in den Kloßteig Eingang finden, wodurch eine Qualitätsverminderung stattfindet. Zudem wird durch die Grobzerkleinerung in Stücke von ca. 3 - 5 cm Kantenlänge eine Größenordnung erhalten, die beim Kochen und anschließenden Abkühlen immer noch einen relativ hohen Energieverbrauch bedingen. Schließlich wird die Feinzerkleinerung durch Reiben durchgeführt, wodurch die Faserstruktur der Masse zerstört und somit die Bindung der Knödelmasse und dadurch die Qualität des Endproduktes stark verringert wird.

Aufgabe der Erfindung ist daher, ein Verfahren genannter Gattung anzugeben, durch das insbesondere das arbeitsintensive Nachputzen der Kartoffeln vollständig entfällt.

Diese Aufgabe wird durch ein gattungsgemäßes Verfahren mit den kennzeichnenden Merkmalen bzw. Verfahrensschritten des Anspruchs 1 gelöst. In den auf Anspruch 1 rückbezogenen Unteransprüchen sind vorteilhafte Ausgestaltungen des erfindungsgemäßen Verfahrens beschrieben.

Demgemäß wird eine Grobzerkleinerung (Zerschneiden) der Kartoffeln in quaderförmige, würfelfömige oder stabförmige Teile vorgenommen, wobei vorzugsweise die Kantenlänge dieser Kartoffelstückchen ca. 5-30 mm beträgt. Hierdurch werden die einzelnen Kartoffeln in eine Anzahl kleinerer Stückchen bestimmter Größe zerlegt, die dann durch die Sortiereinrichtung hindurchgeführt werden. Defekte aufweisende Kartoffelstückchen werden aussortiert, während die guten Stückchen automatisch zur Weiterbehandlung weitergereicht werden.

Nach dem Aussortieren der defekten Kartoffelstückchen aus den zerkleinerten (zerstückelten) Kartoffeln findet somit keine Nacharbeit mehr statt. Dadurch können bei einer in zwei Schichten betriebenen Produktionsanlage ca. 15 Arbeitsplätze eingespart werden (bei einer Stundenleistung von 7 - 8 t), was wiederum eine jährliche Einsparung von ca. DM 400.000 bedeutet. Des weiteren kann durch das In-Stückchen-Schneiden der Kartoffeln und durch nachheriges Aussortieren der defekten Kartoffelstückchen die Schale der Kartoffeln dünner abgenommen werden, wodurch sich die Schälleistung erhöht, gleichzeitig der Abfall verringert wird und auch der Dampfverbrauch sinkt.

Auch erfolgt die Sortierung der relativ kleinen Kartoffelstückchen sehr genau. Durch die automatische Absortierung der Verschmutzungen bzw. der defekten Teile wird eine wesentliche Qualitätsverbesserung erzielt, da z.B. sehr kleine schwarze Punkte auf den kleineren Kartoffelstückchen besser ausgemacht werden können als auf den ganzen Kartoffeln. Auch entfällt die zwischen dem maschinellen Sortieren und Nachputzen in bekannten Verfahren durchgeführte zweite Schälung, die sogenannte Karborund-Schälung, d.h. das Abreiben der Außenschicht unter permanenter Wasserzufuhr. Durch Wegfallen der Karborund-Schälung entfällt folglich ein zusätzlicher Verfahrensschritt. Dadurch werden der Frischwasserverbrauch und das Volumen des anfallenden verschmutzten Abwassers insgesamt wesentlich reduziert.

In Weiterbildung des erfindungsgemäßen Verfahrens wird nach dem Schälen der gewaschenen Kartoffeln eine Kontrollverlesung vorgenommen. Von Vorteil ist des weiteren, wenn diese Kontrollverlesung auf defekte ganze Kartoffeln von Hand vorgenommen wird; d.h., wenn defekte, ganze Kartoffeln, beispielsweise Kartoffeln, die nicht ordnungsgemäß geschält wurden, Kartoffeln die insgesamt schwarz sind oder große schwarze Anteile aufweisen, von Hand entfernt werden. Hierdurch wird der Anteil an defekten Kartoffelstückchen wesentlich reduziert.

Erfindungsgemäß kann die Grobzerkleinerung (Zerschneiden) nach dem Schälen und Kontrollverlesen von Hand der rohen Kartoffeln vorgenommen werden. Dies bringt den Vorteil, daß durch die nunmehr kleinen, eine gleichmäßigere Dimensionierung aufweisenden, rohen Kartoffelstückchen eine niedrigere Temperatur im Kocher benötigt wird, wodurch der Energieverbrauch im Kocher wesentlich reduziert wird. Zudem erfolgt der Kühlvorgang wesentlich schneller und effektiver und (ausreichend) nur durch die kostenlose Außenluft, wodurch auch im Kühltunnel weniger Energie benötigt wird. Der Teig wird wesentlich schneller und durchgehend kälter, da keine großen Kartoffeln vorhanden sind, die sehr viel Zeit benötigen, um auf dieselbe durchgehende Temperatur abgekühlt zu werden. Dies bringt wiederum Vorteile bei der Weiterverarbeitung der gekochten und nunmehr besser abgekühlten Kartoffeln und zudem auch eine Energieeinsparung im Kühlraum.

Wird das erfindungsgemäße Verfahren auf einer herkömmlichen Anlage angewendet, ist von Vorteil, wenn die Grobzerkleinerung, gefolgt vom opto-maschinellen Aussortieren erst nach dem (Halbgar-) Kochen der ganzen Kartoffeln durchgeführt wird. Hierdurch wird vermieden, daß durch die verhältnismäßig kleinen Kartoffelstückchen die vorhandenen Transportsysteme, die mit sehr großen Toleranzen für ganze, rollende Kartoffeln ausgelegt sind, sich durch Zwischenfallen und durch nicht mehr rollende, quader- oder rhombische Teile zugesetzt werden. Die großen Vorteile des Abschälens einer nur dünnen Schicht und des Wegfalls des Nachputzens bleiben jedoch unverändert weiter bestehen.

Des weiteren wirkt sich als sehr vorteilhaft aus, wenn die Grobzerkleinerung der Kartoffeln in Stückchen erfolgt, die die Form von Würfeln aufweisen, die eine Kantenlänge von ca. 8-15 mm besitzen. Hierdurch wird eine relativ gleichmäßige Formgebung der Kartoffelstückchen erreicht, was sich insgesamt auf die weiteren Sortier-, Koch- und Kühlverfahrensschritte positiv auswirkt.

Beim Eintritt in den Verfahrensschritt des Feinzerkleinerns ergibt sich das Problem, daß die kleinen Kartoffelstückchen nicht in herkömmlicher Weise gerieben werden können, um zu Teig verarbeitet zu werden, da die Kartoffelreibe es nicht ermöglicht, die notwendige Faserstruktur bereitzustellen, die für die Bindung der Knödel notwendig ist. Auch wird die Faserstruktur durch Faserverlust, beispielsweise durch Kleinschneiden und Mahlen der Kartoffelstückchen, so weit zerstört, daß, abgesehen vom nicht ausreichenden Binden des pastösen Kartoffelmaterials, auch die fertigen Knödel nicht die notwendige Außenrauheit aufweisen, sondern nach dem Kochen unangenehm glitschig glatt werden. Daher ist von Vorteil, wenn als Feinzerkleinern ein Durchdrücken mit Hilfe einer Durchdrückeinrichtung stattfindet.

Aufgabe der Erfindung ist zudem, eine Einrichtung zum Feinzerkleinern der gekochten kalten Kartoffelstückchen bereitzustellen, durch die die notwendige Faserstruktur für das Teigmaterial erhalten bleibt.

Diese Aufgabe wird durch eine Einrichtung mit den kennzeichnenden Merkmalen des Anspruchs 7 gelöst. Die Unteransprüche 8 ff. kennzeichnen vorteilhafte Ausgestaltungen der Einrichtung.

Demgemäß weist die Einrichtung prinzipiell den Aufbau eines an sich bekannten Fleischwolfes auf, wobei zwischen Lochscheibe und Transportschnecke eine koaxial zu diesen angeordnete Durchdrück-und Schabscheibe (Durchpresserscheibe) vorgesehen ist.

Diese Durchpresserscheibe besitzt mindestens einen Arm, aus belastungstechnischen Gründen vorteilhafter zwei Arme, die einen stumpfen Schabwinkel aufweisen, d. h. sie schneiden nicht, sondern schaben das Kartoffelmaterial von der Lochscheibe und drücken es gleichzeitig durch diese hindurch. Somit findet kein zerschneidendes Zerkleinern der faserigen Kartoffelmasse statt, sondern ein Durchpressen und Schaben, welche eine ähnliche Wirkung in bezug auf die Faserigkeit der Masse entfalten wie das herkömmliche Schaben bei den ganzen gekochten Kartoffeln.

Gemäß einer Weiterbildung des Erfindungsgedankens können vier radial weisende Durchpresserarme an einer Druckpresser-Nabe vorgesehen sein. Dies ist möglich, da die Schab- und Durchpreßkräfte verhältnismäßig gering sind, und die Durchpreßkraft zudem zum Großteil durch die Förderschnecke erbracht wird.

Dabei können die Schab-/Durchpresserarme in Tangentialquerschnitt eine Dreieckform aufweisen, wobei z. B. vorteilhaft ist, wenn eine rechtwinklige Dreieckform gewählt wird und die den rechten Winkel einschließenden Schenkel in Transportrichtung des Kartoffelmaterials bzw. senkrecht dazu ausgerichtet sind, so daß die Hypotenuse im gewünschten Schabwinkel zur Lochscheibe ausgerichtet ist.

Selbstverständlich kann der durch die Schnecke antransportierten Kartoffelmasse senkrecht flach entgegenstehende Armrücken auch eine vom rechten Winkel abweichende Ausrichtung bzw. Auslegung aufweisen, wodurch der durchgeförderten Kartoffelmasse weniger Widerstand entgegengesetzt wird.

Vorteilhaft kann auch sein, wenn der Tangentialquerschnitt der Arme im wesentlichen rund oder oval ist, wobei in der in Laufrichtung der Arme auf der Lochscheibenseite der Schabwinkel eingebracht ist. Diese Ausführung hat den Vorteil, daß die der antransportierten Masse entgegenstehenden Durchpresserarmrücken einen geringeren Widerstand entgegensetzen. Für eine gute Transport- und Durchdrückwirkung ist zudem förderlich, die in Bewegungsrichtung des Durchpresserarmes entgegengesetzte Seite abzuflachen, d. h. diese parallel mit der Transportrichtung auszulegen. Eine besondere Wirkung wird des weiteren erzielt, wenn die aktive Durchpresserkante eine im wesentlichen radiale Ausrichtung und Anordnung aufweist. Zudem wirkt ein in Drehrichtung negativ oder positiv ausgelegter Winkel ein verstärktes Durchdrücken in Richtung Mitte oder Umfang. Auch kann von Vorteil sein, wenn die "Arme" in der Negativ-Zurücksetzrichtung (zu der Bewegungsrichtung) eine Spiralform aufweist, wodurch eine gute Durchpreßwirkung im äußeren Umfangssektor, mit der größeren Lochanzahl der Scheibe, erzielt wird.

Nachfolgend wird die erfindungsgemäße Einrichtung anhand von Ausführungsbeispielen unter Bezug auf die Zeichnungen näher erläutert.

Es zeigt:
- Fig. 1: eine perspektivische Ansicht auf die wesentlichsten Teile der Einrichtung,
- Fig.2+3: Durchdrück-Schabscheiben mit radialer Durchpresserarmausrichtung,
- Fig. 4: eine Durchdruck- und Schabscheibe mit tangentialer Durchpresserarm-Ausrichtung, und
- Fig.5-7: Durchdrück- und Schabscheiben mit spiralförmigen Durchpresserarmen.

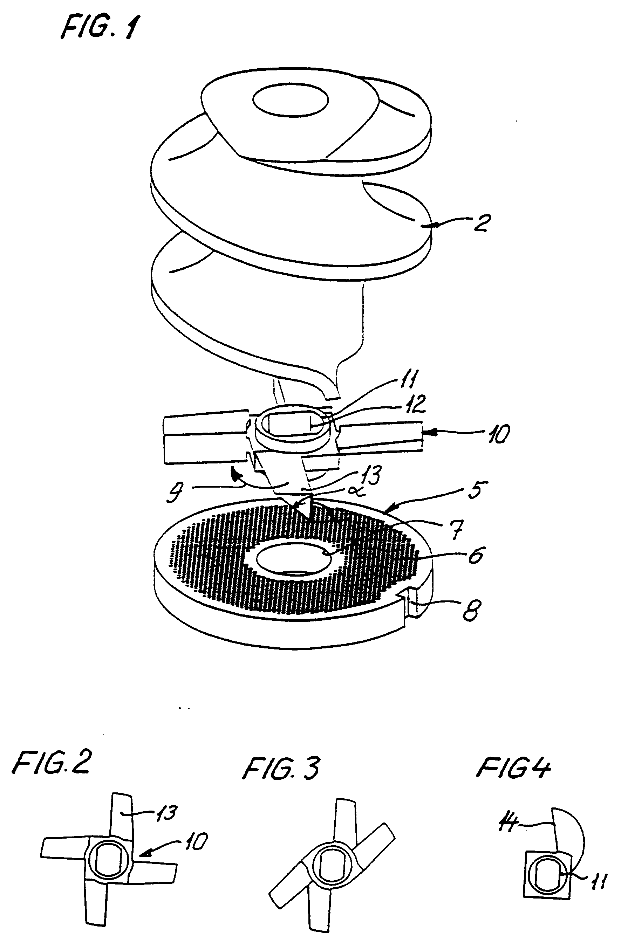

Wie aus Fig. 1 und 2 zu erkennen ist, sind in koaxialer Aufeinanderfolge in einem in der Zeichnung nicht dargestellten, im wesentlichen zylindrischen Gehäuse eine Förderschnecke 2, eine Durchdrück- und Schabscheibe 10 und eine Lochscheibe 5 angeordnet.

Die Lochscheibe 5 ist mit einer Vielzahl axialer Löcher zum Durchtritt der Kartoffelmasse versehen, weist eine zentrische Lagerbohrung 7 auf und hat an ihrem äußeren Umfang eine Nut 8, über die sie im Inneren des Gehäuses drehfest gehalten wird.

Die Förderschnecke 2 ist in ähnlicher Weise wie die Schnecke eines Fleischwolfes ausgebildet und weist Mitnahmeeinrichtungen - wie koaxiale Zapfen - auf.

Die Durchdrück- und Schabscheibe 10 (Durchpresserscheibe) ist so angeordnet, daß sie mit der im Inneren ihrer Nabe 11 angeordneten Durchgangsöffnung 12 zum Beispiel nicht dargestellten Mitnahmezapfen der Förderschnecke 2 aufschiebbar und mitnehmbar ist. An der Nabe 11 sind vier radial weisende Durchpresserarme 13 angeordnet (siehe auch Figuren 2+3). Dabei können die Arme gleichmäßig am Umfang verteilt sein, wie in Figur 2 dargestellt, oder paarweise zusammengeschoben sein, wie aus Figur 3 ersichtlich. Statt vier Arme können jedoch auch eine andere Anzahl von Armen, zum Beispiel ein, zwei, drei oder fünf Arme vorgesehen sein. Die Arme 13 haben einen Dreieck-Querschnitt in Tangential-Schnittrichtung. Das Querschnittsdreieck ist ein im wesentlichen rechtwinkliges Dreieck, dessen eine Kathete in axial-radialer Richtung und die zweite Kathete senkrecht zu dieser ausgerichtet ist. Die Hypotenuse bildet mit der axial-radialen Kathete den aktiven Armteil, wobei zu beachten ist, daß sich die Durchpresserarme (in der Zeichnung gesehen) im Uhrzeigersinn bewegen, entsprechend dem eingezeichneten Pfeil 9. Es ist zu erkennen, daß der stumpfe Durchpresserwinkel (α) einen Schab- und Durchpreßeffekt aufweist. Der Druchpresser ist mit seiner vorderen Stirnseite in der Bohrung 7 der Lochscheibe 5 drehbar gelagert und zwar über seine Nabe 11 bzw. deren äußeren Umfang oder einen entsprechenden Lagerzapfen der Nabe.

Es besteht jedoch auch die Möglichkeit, am Mitnahmezapfen der Förderschnecke 2 einen weiteren zylindrischen Zapfen vorzusehen, der in die Lagerbohrung 7 der Lochscheibe 5 hineinreicht, so daß die Förderschnecke 2 mit ihrem vorderen Ende in der Lochscheibe gelagert ist.

In der in Figur 4 in Draufsicht dargestellten weiteren Ausführungsform des Durchpressers 10 ist ersichtlich, daß dessen Durchpresserarm 14 bzw. dessen aktive "Schneide" tangential an der Durchpressernabe 11 angeordnet ist. Selbstverständlich können auch hier beliebig viele Arme angeordnet sein. Diese Anordnung fördert den Durchpreßeffekt.

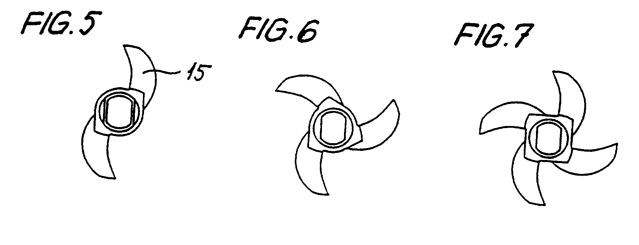

Bei den in Figuren 5 - 7 dargestellten Durchpressern sind die zwei, drei oder vier Durchpresserarme 15 in Spiralform ausgelegt und zwar so, daß sie - in Drehrichtung gesehen - von innen nach außen zurückweichend ausgebildet sind. Hierdurch wird der Durchdrückeffekt verstärkt und die Kartoffelmasse wird vorzugsweise an den Außenrand, an dem eine größere Lochanzahl der Lochscheibe überstrichen wird, geschoben.

### Bezugszeichenliste

- 1.: -
- 2.: Förderschnecke
- 3.: -
- 4.: -
- 5.: Lochscheibe
- 6.: Löcher
- 7.: Lagerbohrung
- 8.: Nut
- 9.: Pfeil
- 10.: Durchdrück- und Schabscheibe (Durchpresserscheibe)
- 11.: Nabe
- 12.: Aufnahmebohrung/Durchbruch
- 13.: Durchpresserarm, radial
- 14.: Durchpresserarm, tangential
- 15.: Durchpresserarm, spiralförmig
- α.: Durchpresser-/Schabwinkel

## Patentansprüche

1. Verfahren zum Verarbeiten von Kartoffeln für die industrielle Herstellung von Kartoffelteig, bestehend aus folgenden Schritten:
- Schälen der gewaschenen rohen Kartoffeln,
- opto-maschinelles Aussortieren der defekten Kartoffeln,
- Nachputzen der aussortierten, defekten Kartoffeln,
- Kochen der Kartoffeln,
- Kühlen der gekochten Kartoffeln,
- Fein-Zerkleinern der kalten, gekochten Kartoffeln für die Teigvorbereitung,
**dadurch gekennzeichnet,**
- daß eine Grob-Zerkleinerung (Zerschneiden) der Kartoffeln erfolgt, vorzugsweise in Form von Quadern, Würfeln, Stäben usw. mit einer Kantenlänge von 5-30 mm und
- daß das opto-maschinelle Aussortieren nach der Grob-Zerkleinerung erfolgt und kein Nachputzen mehr stattfindet.

2. Verfahren nach Anspruch 1,
dadurch gekennzeichnet, daß die Grob-Zerkleinerung (Zerschneiden) nach dem Schälen der Kartoffeln erfolgt.

3. Verfahren nach Anspruch 1,
dadurch gekennzeichnet, daß die Grob-Zerkleinerung (Zerschneiden) und das opto-maschinelle Aussortieren nach dem Kochen und Kühlen der Kartoffeln durchgeführt werden.

4. Verfahren nach Anspruch 1,
dadurch gekennzeichnet, daß nach dem Schälen der Kartoffeln eine Kontrollverlesung vorgenommen wird, vorzugsweise von Hand auf defekte ganze Kartoffeln.

5. Verfahren nach Anspruch 1,
dadurch gekennzeichnet, daß die Grob-Zerkleinerung in Form von Würfeln mit einer Kantenlänge von ca. 8 bis 15 mm erfolgt.

6. Verfahren nach Anspruch 1,
dadurch gekennzeichnet, daß als Fein-Zerkleinern der gekochten kalten Kartoffeln ein Durchdrücken mit Hilfe einer Durchdrück-Einreichung stattfindet.

7. Einrichtung zum Durchführen des Verfahrensschrittes des Durchdrückens nach Anspruch 6,
**dadurch gekennzeichnet,**
- daß sie in Art eines an sich bekannten Fleischwolfs mit in einem zylindrischen Gehäuse koaxial und zugleich axial aufeinanderfolgend angeordneten Förderschnecke (2), Messer und Lochscheibe (5) aufgebaut ist,
- wobei zwischen Lochscheibe (5) und Förderschnecke (2) statt eines Messers eine die gekochten Kartoffeln durch die Lochscheibe (5) hindurchdrückende Durchdrück- und Schabscheibe (Durchpresserscheibe) (10) angeordnet ist.

8. Einrichtung nach Anspruch 7,
dadurch gekennzeichnet, daß der Durchpresser (10) mindestens einen im wesentlichen radial ausgerichteten Durchpresserarm (13), mit jeweils Aktiv-Negativwinkeln zur Lochscheibe hin aufweist.

9. Einrichtung nach Anspruch 8,
dadurch gekennzeichnet, daß die Durchpresserarme (13) einen Dreieckquerschnitt aufweisen.

10. Einrichtung nach Anspruch 8,
dadurch gekennzeichnet, daß die Durchpresserarme (13) einen im wesentlichen runden Querschnitt aufweisen, mit daran vorgesehenen Durchdrückabflachungen.

11. Einrichtung nach Anspruch 8, dadurch gekennzeichnet, daß die Durchpresserarme (4) in deren Rotationsrichtung gesehen, winklig zurückgesetzt sind.

12. Einrichtung nach Anspruch 8,
dadurch gekennzeichnet, daß die Durchpresserarme (15) eine Spiralform aufweisen, wobei die Spiralen in Rotationsrichtung zurücktretend ausgebildet sind.

## Claims

1. Method for processing potatoes for industrial manufacture of potato paste, consisting of the following steps:
- peeling of the washed raw potatoes,
- optical machine separation of the defective potatoes,
- further cleaning of the separated defective potatoes,
- boiling of the potatoes,
- cooling of the boiled potatoes,
- fine cutting of the cold boiled potatoes for preparation of the paste,
characterised in that
- coarse cutting of the potatoes is effected, preferably in the form of blocks, cubes, rods, etc with an edge length of 5-30 mm and
- the optical machine separation is effected after the coarse cutting and no further cleaning takes place any more.

2. Method according to claim 1, characterised in that the coarse cutting is effected after the peeling of the potatoes.

3. Method according to claim 1, characterised in that the coarse cutting and the optical machine separation are carried out after the boiling and cooling of the potatoes.

4. Method according to claim 1, characterised in that after the peeling of the potatoes check picking is carried out, preferably by hand, for defective whole potatoes.

5. Method according to claim 1, characterised in that the coarse cutting is effected in the form of cubes with an edge length of approximately 8 to 15 mm.

6. Method according to claim 1, characterised in that pressing with the aid of a pressing apparatus takes place as fine cutting of the boiled cold potatoes.

7. Apparatus for performing the pressing step according to claim 6, characterised in that it is constructed like a mincer known per se with a conveying screw (2), cutter and perforated disk (5) disposed coaxially in a cylindrical housing and at the same time following one another axially, whereby a pressing and scraping disk (presser disk) (10) pressing the boiled potatoes through the perforated disk (5) is disposed between the perforated disk (5) and the conveying screw (2) instead of a cutter.

8. Apparatus according to claim 7, characterised in that the presser (10) exhibits at least one presser arm (13) aligned essentially radially with in each case active negative angles relative to the perforated disk.

9. Apparatus according to claim 8, characterised in that the presser arms (13) exhibit a triangular cross-section.

10. Apparatus according to claim 8, characterised in that the presser arms (13) exhibit an essentially round cross-section with pressing flats provided thereon.

11. Apparatus according to claim 8, characterised in that the presser arms (4) are set back at an angle viewed in their direction of rotation.

12. Apparatus according to claim 8, characterised in that the presser arms (15) exhibit a spiral shape, the spirals being formed so that they run backwards in the direction of rotation.

## Revendications

1. Procédé de traitement des pommes de terre pour la fabrication industrielle de pâte de pommes de terre, consistant en les étapes suivantes:
- Epluchage des pommes de terre lavées crues,
- Triage optique automatique des pommes de terre défectueuses,
- Renettoyage des pommes de terre triées défectueuses,
- Cuisson des pommes de terre,
- Refroidissement des pommes de terre cuites
- Fragmentation fine des pommes de terre froides, cuites pour la préparation de pâte,
caractérisé en ce
- qu'on effectue une fragmentation grossière (coupe) des pommes de terre, de préférence sous forme de parallélépipèdes, de cubes, de bâtonnets etc. ayant un côté d'une longueur comprise entre 5 à 30 mm et
- qu'on effectue le triage optique automatique après la fragmentation grossière et qu'un renettoyage n'a plus lieu.

2. Procédé suivant la revendication 1,
caractérisé en ce que la fragmentation grossière (coupe) s'effectue après l'épluchage des pommes de terre.

3. Procédé suivant la revendication 1,
caractérisé en ce que la fragmentation grossière (coupe) et le triage optique automatique sont effectués après la cuisson et le refroidissement des pommes de terre.

4. Procédé suivant la revendication 1,
caractérisé en ce qu'un triage de contrôle est effectué après l'épluchage des pommes de terre, de préférence à la main, des pommes de terre défectueuses entières.

5. Procédé suivant la revendication 1,
caractérisé en ce que la fragmentation grossière s'effectue sous forme de cubes ayant un côté d'une longueur comprise environ entre 8 à 15 mm.

6. Procédé suivant la revendication 1,
caractérisé en ce qu'en tant que fragmentation fine des pommes de terre cuites froides, on effectue un pressage à l'aide d'un appareil dans lequel les pommes de terre sont pressées dans des trous traversants d'un disque.

7. Dispositif pour la mise en oeuvre du stade de pressage suivant la revendication 6,
caractérisé
- en ce qu'il est constitué à la manière d'un hachoir à viande en soi connu, comprenant dans une enveloppe cylindrique, en étant disposés coaxialement tout en se succédant axialement, une vis convoyeuse (2), un couteau et un disque perforé (5),
- un disque (10) de pressage et de râclage (disque par lequel les pommes de terre sont pressées dans des trous traversants), faisant passer les pommes de terre cuites à travers le disque perforé (5), étant prévu entre le disque perforé (5) et la vis convoyeuse (2), au lieu d'un couteau.

8. Dispositif suivant la revendication 7,
caractérisé en ce que le disque de pressage (10) comporte au moins un bras de pressage dirigé sensiblement radialement et faisant respectivement des angles actifs-négatifs avec le disque perforé.

9. Dispositif suivant la revendication 8,
caractérisé en ce que les bras (13) de pressage ont une section transversale triangulaire.

10. Dispositif suivant la revendication 8,
caractérisé en ce que les bras (13) de pressage ont une section transversale sensiblement circulaire, des méplats de pressage y étant prévus.

11. Dispositif suivant la revendication 8,
caractérisé en ce que les bras (4) de pressage sont, vus dans leur sens de rotation, angulairement en arrière.

12. Dispositif suivant la revendication 8,
caractérisé en ce que les bras (15) de pressage ont une forme en spirale, les spirales reculant dans le sens de rotation.
